# EUROPEAN PATENT APPLICATION

(11) **EP 4 178 206 A1**
(43) Date of publication of application: **10.05.2023**
(21) Application number: 20943661.7
(22) Date of filing: 04.08.2020
(51) Int. Cl.: H04N 21/20, H04N 21/234, H04N 21/258, H04N 21/2747, H04N 21/4147, H04N 21/80, G06F 16/783, G06F 16/61, G06F 16/63, G06F 16/65, G06F 16/68, G06N 3/02, G06N 5/04

(54) **SYSTEM (EMBODIMENTS) FOR HARMONIOUSLY COMBINING VIDEO FILES AND AUDIO FILES AND CORRESPONDING METHOD**

(30) Priority: 03.07.2020 UA 202004014
(71) Applicant: Harmix Inc., Wilmington New Castle County, DE 19808 (US)
(72) Inventor: PONOCHEVNYI, Nazar Yurievych, city Vyshneve, 08133 (UA)
(74) Representative: AOMB Polska Sp. z.o.o.
(86) International application number: PCT/UA2020/000076
(87) International publication number: WO 2022/005442

(57) **Abstract**

The invention relates to computer systems, in particular, to systems which enable to process large data sets by means of artificial intelligence technologies, and may be used to create video clips with a video and a music combined in a harmonious fashion. Variants of a system for providing a harmonious combination of video files and audio files are proposed, the system comprises: at least one server, at least one user computing device, and the at least one server further comprises an intelligent system that comprises an artificial intelligence component having instruments to learn one or more machine learning and data analysis algorithms in order to provide a harmonious combination of the video files and the audio files, the intelligent system comprises: data collection and analysis modules to learn and to operate machine learning and data analysis models; analysis modules; audio parameters and video parameters recommendation modules; audio files and video files search modules; audio files and video files generation modules; synchronization modules, wherein the video parameters are characteristics of the video file: objects, actions, a mood of the video, an activity and peaks, a frame illumination change, a change of colors, a scene change, a movement speed of a background relative to a foreground in the video file, a sequence of frames and a metadata of the video file, the audio parameters are parameters of the audio file: a genre, a tempo, an energy level, an activity and peaks, a mood, an acousticness, a rhythmicity and an instrumentality of a music, a number of sounds and noises, a digital acoustic signal and a metadata of the audio file. A method for providing a harmonious combination of video files and audio files is proposed, the method comprises the steps of: uploading at least one video file or audio file to the intelligent system for providing a harmonious combination of video files and audio files; analyzing said video file or audio file; detecting parameters of a video stream or an audio stream; predicting corresponding audio parameters or video parameters; searching for at least one audio file that comprises the predicted audio parameters or at least one video file that comprises the predicted video parameters within databases; generating at least one audio file that comprises the predicted audio parameters or at least one video file that comprises the predicted video parameters; assembling and synchronizing the audio file found within the databases or the generated audio file and the video file received from the user computing device, or assembling and synchronizing the video file found within the databases or the generated video file and the audio file received from the user computing device, returning a video clip created by the intelligent system to the user computing device.

## Description

The proposed invention relates to computer systems, in particular, to systems which enable to process large data sets by means of artificial intelligence technologies, and may be used to create video clips with a video and a music combined in a harmonious fashion.

Video blogging as well as video and audio industry become very popular in XXI century due to development of multimedia and telecommunication systems. For example, a number of unique users that visit the YouTube video hosting on a monthly basis has exceeded 1 billion. A process of selection of a music for a video as well as a video for a music to provide their harmonious combination and to express a creator's idea is challenging for composers, video editors and bloggers. Thus, there is a problem of how to provide a system that could select a music for a video and a video for a music to provide their harmonious combination and to express a creator's idea by utilizing artificial intelligence creation methods.

A prior art teaches an apparatus for use in editing video and audio content (Application US20120014673A1, IPC G11B 27/034, publ. on January 19, 2012), the apparatus comprises includes a processing system for determining a video part using video information, the video information being indicative of the video content, and the video part being indicative of a video content part; determining an audio part using a first audio information, the first audio information being indicative of a number of events and representing the audio content, and the audio part being indicative of an audio content part including an audio event; and editing, at least in part using the audio event, at least one of the video content part; and the audio content part using second audio information indicative of the audio content. A drawback of the disclosed solution lies in limited technical possibilities.

An interactive music system is known (Application US20130023343A1, IPC A63F13/67, publ. on January 24, 2013), the system comprises: a music device configured to play music; and a processor connected to the music device. The system described in this document specifies when music which is accessible from a local or non-local music library with certain characteristics should be played in response to interactive media application actions or a user state such as in video games or other computer programs. The disclosed system is merely intended to select a music accompaniment for playing of stages of video games.

A system for modifying videos based on music is known (Patent US10127943B1, IPC G11B27/031, priority date: March 2, 2017), the system comprises: one or more physical processors configured by machine-readable instructions to access a video information defining a video content; access a music information defining a music track; select one or more visual effects for one or more of different moments within the music track based on categories of one or more music events; and apply the one or more visual effects to the video content, which are aligned to the one or more of the different moments within the music track. A drawback of the disclosed system is that it is not possible to select the music for the created video to provide their harmonious combination.

A drawback of the disclosed solutions lies in limited possibilities for searching the music to be further played together with the video clip. Furthermore, the existing disclosed solutions do not provide an automatic creation of a video clip which could have a harmonious combination of the video and the music.

A technical aim of the proposed invention is to provide an automatic creation of a video clip with a harmonious combination of a video and a music by utilizing machine learning and data analysis methods.

The aim is achieved by proposing a system (according to a first embodiment) for providing a harmonious combination of video files and audio files, the system comprises:
at least one server comprising at least one computer processor,
at least one user computing device comprising a memory-stored software application that provides an access to the server, and each user computing device is connected via a communication network to the at least one server;
and the at least one server is configured to process incoming requests in parallel, where the incoming request is at least a request to create video clips, and connected to databases configured to store audio files and/or video files,
wherein, according to the invention, the at least one server further comprises an intelligent system that comprises an artificial intelligence component having instruments to learn one or more machine learning and data analysis algorithms in order to provide a harmonious combination of the video files and the audio files, the intelligent system comprises:
   a data collection and analysis module to learn and to operate machine learning and data analysis models;
   an analysis module configured to analyze at least one video file received from the user computing device and to detect parameters of a video stream;
   an audio parameters recommendation module configured to receive the detected video parameters and to predict corresponding audio parameters;
   an audio files search module configured to receive the predicted audio parameters and to search for at least one audio file that comprises the predicted audio parameters within the databases;
   an audio files generation module configured to receive the predicted audio parameters and to generate at least one audio file that comprises the predicted audio parameters;
   a synchronization module configured to receive the at least one audio file from the audio files search module and/or from the audio files generation module, and to assemble and to synchronize said audio file and the video file received from the user computing device, and to return the video clip created by the intelligent system to the user computing device,
   wherein
   the video parameters are characteristics of the video file: objects, actions, a mood of the video, an activity and peaks, a frame illumination change, a change of colors, a scene change, a movement speed of a background relative to a foreground in the video file, a sequence of frames and a metadata of the video file,
   the audio parameters are parameters of the audio file: a genre, a tempo, an energy level, an activity and peaks, a mood, an acousticness, a rhythmicity and an instrumentality of a music, a number of sounds and noises, a digital acoustic signal and a metadata of the audio file.

The posed aim is achieved by proposing a system (according to a second embodiment) for providing a harmonious combination of audio files and video files, the system comprises:
at least one server comprising at least one computer processor,
at least one user computing device comprising a memory-stored software application that provides an access to the server, and each user computing device is connected via a communication network to the at least one server;
and the at least one server is configured to process incoming requests in parallel, where the incoming request is at least a request to create video clips, and connected to databases configured to store audio files and/or video files,
wherein, according to the invention, the at least one server further comprises an intelligent system that comprises an artificial intelligence component having instruments to learn one or more machine learning and data analysis algorithms in order to provide a harmonious combination of the video files and the audio files, the intelligent system comprises:
   a data collection and analysis module to learn and to operate machine learning and data analysis models;
   an analysis module configured to analyze at least one audio file received from the user computing device and to detect parameters of an audio stream;
   a video parameters recommendation module configured to receive the detected audio parameters and to predict corresponding video parameters;
   a video files search module configured to receive the predicted video parameters and to search for at least one video file that comprises the predicted video parameters within the databases;
   a video files generation module configured to receive the predicted video parameters and to generate at least one video file that comprises the predicted video parameters;
   a synchronization module configured to receive the at least one video file from the video files search module and/or from the video files generation module, and to assemble and to synchronize said video file and the audio file received from the user computing device, and to return the video clip created by the intelligent system to the user computing device,
   wherein
   the audio parameters are parameters of the audio file: a genre, a tempo, an energy level, an activity and peaks, a mood, an acousticness, a rhythmicity and an instrumentality of a music, a number of sounds and noises, a digital acoustic signal and a metadata of the audio file,
   the video parameters are characteristics of the video file: objects, actions, a mood of the video, an activity and peaks, a frame illumination change, a change of colors, a scene change, a movement speed of a background relative to a foreground in the video file, a sequence of frames and a metadata of the video file.

The posed aim is achieved by proposing a method for providing a harmonious combination of video files and audio files performed by the system according to claim 1 and claim 2, the system comprises at least one server comprising at least one computer processor that comprises an intelligent system and at least one user computing device, the inventive method comprises the steps of:
- uploading at least one video file or audio file to the intelligent system for providing a harmonious combination of video files and audio files;
- analyzing said video file or audio file;
- detecting parameters of a video stream or an audio stream;
- predicting corresponding audio parameters or video parameters;
- searching for at least one audio file that comprises the predicted audio parameters or at least one video file that comprises the predicted video parameters within databases;
- generating at least one audio file that comprises the predicted audio parameters or at least one video file that comprises the predicted video parameters;
- assembling and synchronizing the audio file found within the databases or the generated audio file and the video file received from the user computing device,
   or
- assembling and synchronizing the video file found within the databases or the generated video file and the audio file received from the user computing device,
- returning a video clip created by the intelligent system to the user computing device.

Furthermore, the steps of assembling and synchronizing the audio file and the video file comprise adding at least one video effect, audio effect, filter or any other audiovisual content.

The proposed invention is explained in the drawings, where:
Fig. 1 schematically shows a structure of the proposed system;
Fig. 2 schematically shows the server of the proposed system (according to the first embodiment);
Fig. 3 schematically shows the server of the proposed system (according to the second embodiment);
Fig. 4 shows a result of a SSD model operation;
Fig. 5 shows an exemplary spectrogram of the audio stream;
Fig. 6 shows an exemplary mel spectrogram of the audio stream;
Fig. 7 shows an exemplary chromagram of the audio stream;
Fig. 8 shows an exemplary tonal spectrum;
Fig. 9 shows a fragment of a training sample.

A more detailed description of certain exemplary embodiments of the invention with references to the accompanying drawings which show certain, but not all embodiments of the invention, will be provided herein below. In fact, various embodiments of the invention in various forms are possible, and they are not limited by the provided examples. The same elements are indicated by the same digits on all the drawings.

As used herein, terms "data", "parameters", "video parameters", "audio parameters" and similar may be used to indicate a data that may be transmitted or being transmitted, received and/or stored according to the embodiments of the invention. Thus, use of any of these terms shall not limit the concept and the scope of the embodiments of the invention.

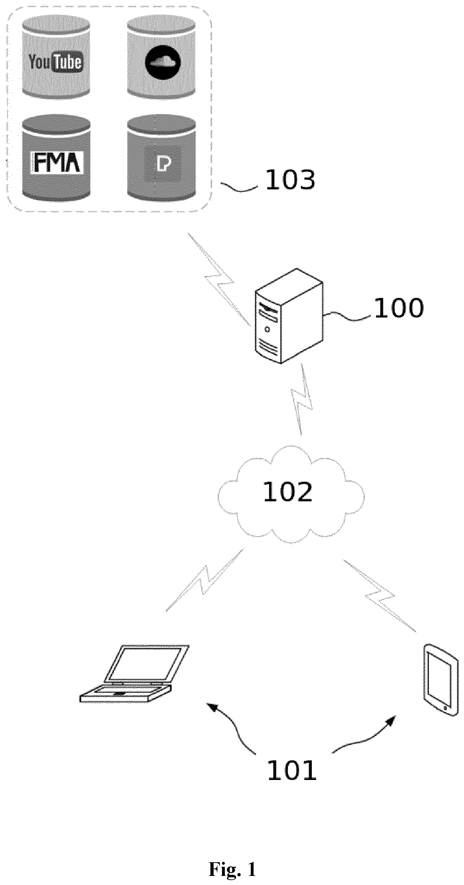

As shown in Fig. 1, a proposed system (variants) for providing a harmonious combination of video files and audio files comprises at least one server 100 that comprises at least one computer processor, at least one user computing device 101 that comprises a memory-stored software application that provides an access to the server, and each user computing device is connected to the at least one server 100 via a communication network 102. The at least one server 100 is configured to process incoming requests in parallel, where the incoming request is at least a request to create video clips, and connected to databases 103 configured to store audio files and/or video files.

A user possesses the computing device 101 that comprises the memory-stored software application that provides the access to the server that may be used to transmit a data within the network to or from the server(s). Typical computing devices 101 include cellular phones, personal digital assistants (PDAs), but they also may include portable computers, hand-held devices, desktop computers etc. Upon registration in the system (in any traditional way), the user downloads a specially developed mobile application to their device.

The network(s) 102 is a network of any type or a combination of networks which could enable a communication between said devices. For example, the network(s) 102 may include, but without limitation, a global network, a local network, a closed network, an open network, a packet network, a circuit-switched network, a wired network and/or a wireless network.

The server 100 of the system comprises at least one processor and a database to store a user profile that is associated with databases configured to store audio files and/or video files. Such databases may be Youtube Audio Library, Pexels Videos, Free Music Archive, BENSOUND, Purple Planet Music or other.

A functionality of the server 100 is implemented by an electronic circuit. In particular, the functionality is implemented by the electronic circuit comprising at least one processor that is implemented based on tensor and/or graphic processor intended to use artificial neuron networks, an independent data medium having a program recorded thereon, a communication interface, an input device and an output device. For example, the data medium consists of a magnetic disk or a semiconductor storing device (in particular, a flash memory NAND). For example, the communication interface is a wired or a wireless interface system for exchanging a data with an external environment (computing devices and databases). The server 100 may comprise an input device and an output device. The input device, for example, is an information input device, e.g., a mouse, a keyboard, a touch panel, a button panel and a microphone. The output device, for example, is an information output device, in particular, a display and a speaker.

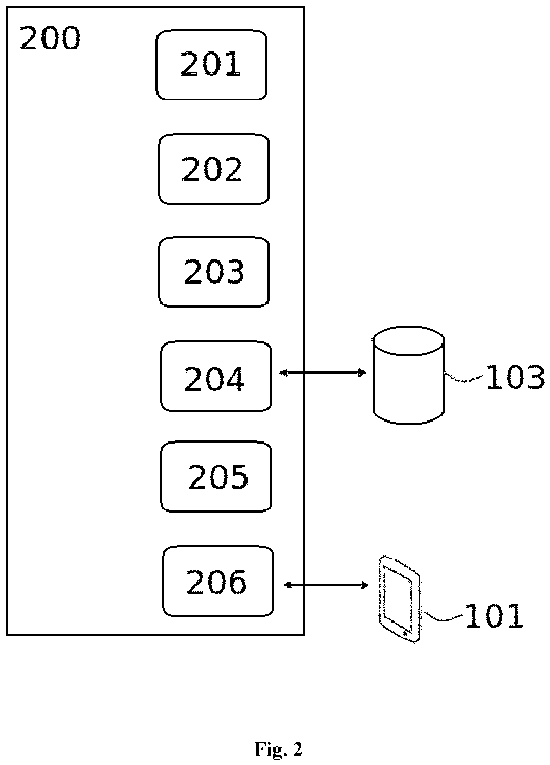

According to the first embodiment (as shown in Fig. 2), the server 100 further comprises an intelligent system 200 for providing a harmonious combination of video files and audio files, the system is self-learnable and comprises:
a data collection and analysis module 201 to learn and to operate machine learning and data analysis models;
an analysis module 202 configured to analyze at least one video file received from the user computing device 101 and to detect parameters of a video stream;
an audio parameters recommendation module 203 configured to receive the detected video parameters and to predict corresponding audio parameters;
an audio files search module 204 configured to receive the predicted audio parameters and to search for at least one audio file that comprises the predicted audio parameters within the databases 103;
an audio files generation module 205 configured to receive the predicted audio parameters and to generate at least one audio file that comprises the predicted audio parameters;
a synchronization module 206 configured to receive the at least one audio file from the audio files search module 204 and/or from the audio files generation module 205, and to assemble and to synchronize said audio file and the video file received from the user computing device 101, and to return the video clip created by the intelligent system 200 to the user computing device.

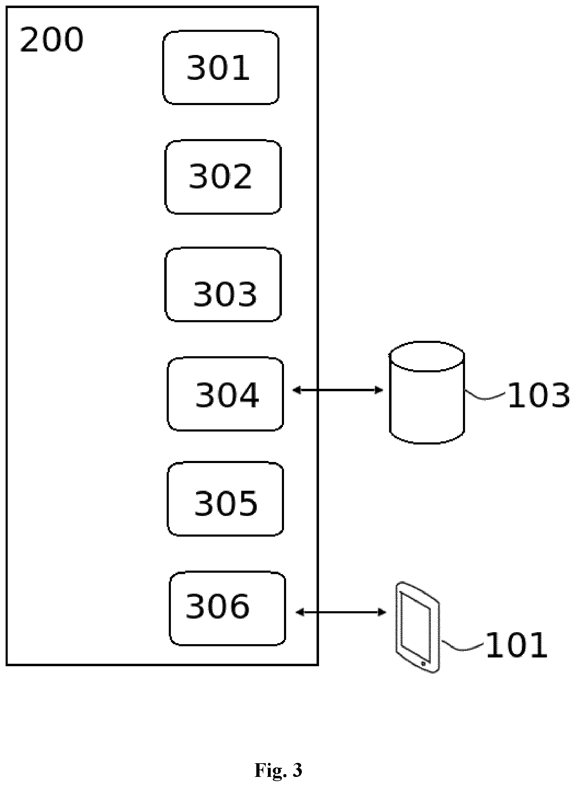

According to the second embodiment (as shown in Fig. 3), the server 100 further comprises an intelligent system 200 for providing a harmonious combination of video files and audio files, the system is self-learnable and comprises:
a data collection and analysis module 301 to learn and to operate machine learning and data analysis models;
an analysis module 302 configured to analyze at least one audio file received from the user computing device and to detect parameters of an audio stream;
a video parameters recommendation module 303 configured to receive the detected audio parameters and to predict corresponding video parameters;
a video files search module 304 configured to receive the predicted video parameters and to search for at least one video file that comprises the predicted video parameters within the databases 103;
a video files generation module 305 configured to receive the predicted video parameters and to generate at least one video file that comprises the predicted video parameters;
a synchronization module 306 configured to receive the at least one video file from the video files search module 304 and/or from the video files generation module 305, and to assemble and to synchronize said video file and the audio file received from the user computing device 101, and to return the video clip created by the intelligent system 200 to the user computing device.

The proposed invention utilizes machine learning and data analysis methods for obtaining characteristics of the video files and audio files, and to analyze them, to search and to provide recommendations. Such methods include:
1) A multilayer perceptron (MLP) that consists of three layers: an input layer, a hidden layer and an output layer. In the proposed invention, three main methods for learning of neural networks with a teacher were used: a gradient descent, a genetic algorithm and a backpropagation algorithm. Also, a transfer learning was used in order to shorten a learning time.

It is known that in order to move to a minimum of a function in the gradient descent algorithm, it is required to calculate a function gradient in a specific point and to perform the descent along a function anti-gradient with a dynamic step. When using the genetic algorithm, a population of several objects having weighting factors is randomly generated, the best objects of the population are merged, a mutation method is executed for a new population etc. Such method was used for nonsmooth functions or functions having a large number of local minimums. For example, for the music genre, energy level, mood, acousticness and instrumentality, perceptrons perform learning by the backpropagation algorithm.

2) An artificial convolutional network (CNN). It is known that the CNN is a specialized architecture for deep learning of artificial neuron networks that is intended to provide an effective detection of images. Learning using a data within the convolutional neuron network implies an adjustment of filters and a fully connected layer of neutrons to provide a correction reaction to abstract objects and to increase an operation accuracy of the model. The convolutional networks are learned by means of the backpropagation algorithm. In the proposed technical solution, the CNN was used to detect and to classify objects in the video, to classify actions in the video and to classify high-level characteristics of the music.

3) An artificial recurrent network (RNN). It is known that the RNN is a type of neural networks, where connections between elements form a directed sequence. Owing to that, the proposed technical solution enables to process series of events in time or successive spatial chains. In particular, a sequence of video parameters, a sequence of audio parameters, a time sequence and a series of audio signal binary numbers.

Main data in the operation of the proposed system is "video parameters", "audio parameters" and a detailed description of their obtaining is given below.

In order to analyze the sequence of frames of the video stream (the module 202) in detail and to reveal the video parameters, namely, objects, actions, a mood of the video, an activity and peaks, a frame illumination change, a change of colors, a scene change, a movement speed of a background relative to a foreground in the video file, a sequence of frames and a metadata of the video file, systems of deep-learning neural networks were created by combining and advancing simple neural networks.

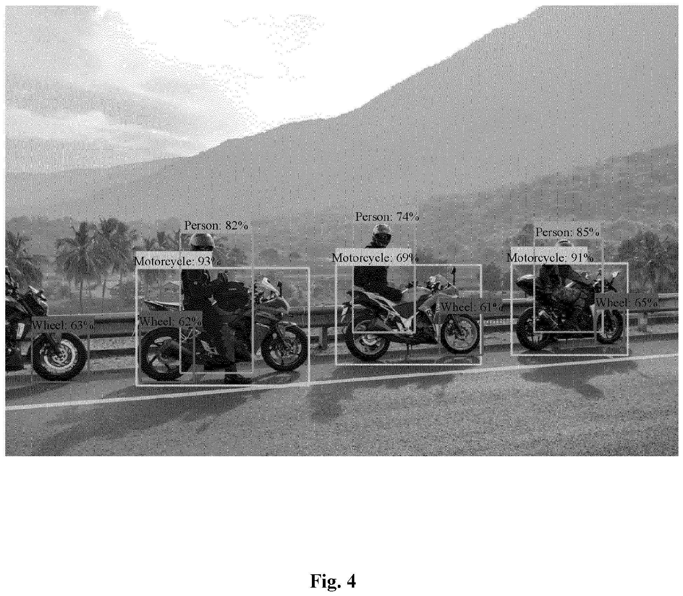

In order to detect the objects in the video, a model under a Single Shot MultiBox Detector (abbreviated as SSD) was used, the model is capable of detecting the objects in the image in real time. The model is based on the artificial convolutional neural network, and at each step of convoluting and pooling thereof, a map of features is fed to an input of the perceptron that creates a plurality of "default boxes" which are locations on the image, where objects may be located, and the model assigns a class probability and coordinates to each location in order to correct the location of the object, thereby increasing the accuracy. Then, results are filtered, and only those results remain which the model is most confident about. Such algorithm is used to perform the detection at any scale and in real time. (Fig. 4) shows a result of the model operation.

In order to detect the actions in the video, several models of the deep-learning neural networks were used for further comparison. In order to detect the activity and peaks of the video, the frame illumination change, a frame tone change, the sudden scene change, the movement speed of the background relative to the foreground in the video file, the sequence of frames and the metadata of the video file, prior art algorithms were used.

While in order to determine the mood of the video, i.e., a person's feeling during watching the video clip, the following method was used: neurointerfaces and heart rate sensors, respiration rate sensors etc. were mounted on a selected group of people, and a large number of video clips was shown to them, while fixing all the data. Upon data collection and markup, a model of two recurrent neural networks LSTM (abbreviated as LSTM+LSTM) was built and learned, and this model fed activity charts to the output upon receipt the video stream at the input. And, by using algorithms for searching extremums, it found the weakest and the strongest points, peaks in the video. For example, strong peaks are indicative of dynamic and scary moments in the video, and during watching them, a person's brain activity is changed and/or a heart rate and/or respiration rate are/is increased, while minimums are indicative of static and calm moments in the video, and during watching them, a person's brain activity is changed and/or a heart rate and/or respiration rate are/is reduced.

In order to analyze the audio file (the module 302) received from the user computing device and to detect the parameters of the audio stream: a genre, a tempo, an energy level, an activity and peaks, a mood, an acousticness, a rhythmicity and an instrumentality of a music, a number of sounds and noises, a digital acoustic signal and a metadata of the audio file, the audio data was represented by various methods for representing the audio signal and average values of each parameters were taken. Several methods for presenting the audio signal were used.

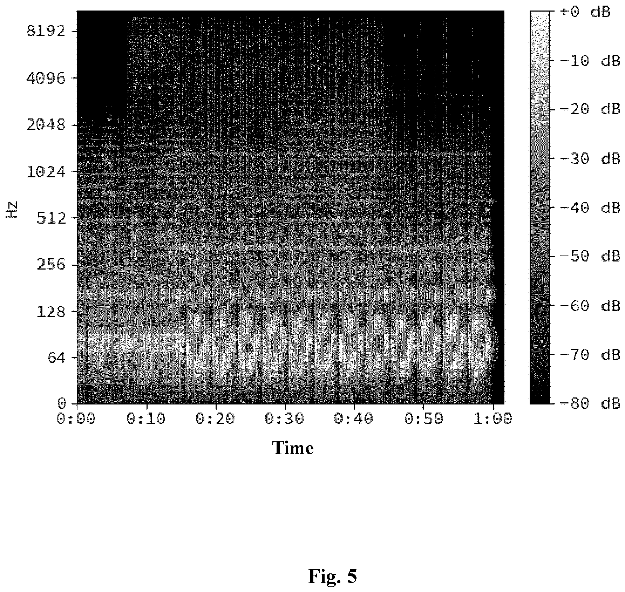

A first presentation method is a spectrogram. The spectrogram is a presentation of the audio signal in the form of a change of frequencies of the audio signal over time. In other words, there are two axes of coordinates: time and frequency, and the chart is changed over time and it changes the own color as a function of intensity of a separate frequency at the current moment. This presentation provides much more data required for the analysis as compared to a wave presentation. While in order to derive a spectrogram from an amplitude wave, a windowed Fourier transform method is used. An example of such spectrogram is presented in the (Fig. 5).

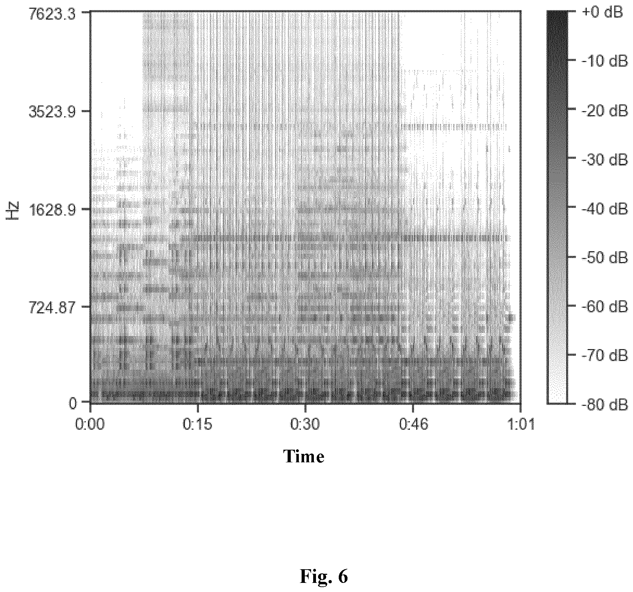

Another method for presenting the audio signal is a mel-frequency cepstrum (abbreviated as MFC). The mel-frequency cepstrum is a representation of the short-term power spectrum of a sound, based on a linear cosine transform of a log power spectrum on a nonlinear mel scale of frequency. Mel-frequency cepstral coefficients (abbreviated as MFCCs) are coefficients that collectively make up an MFC and they are used for analysis of the audio data. (Fig. 6) presents an exemplary mel spectrogram.

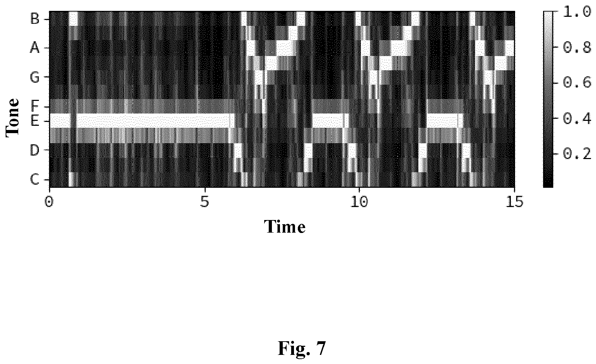

A third method for presenting the audio signal is a chromagram. In the music context, the chromagram closely relates to the twelve different pitch classes. The chromagram which is also referred to as pitch classes of a tone is a powerful tool for analyzing the music which enables a meaningful categorization of the audio signals. In other words, the chromagrams capture harmonic and melodic characteristics of the music and may be used to analyze the pitch class and music timbre. An exemplary chromagram is shown in (Fig. 7).

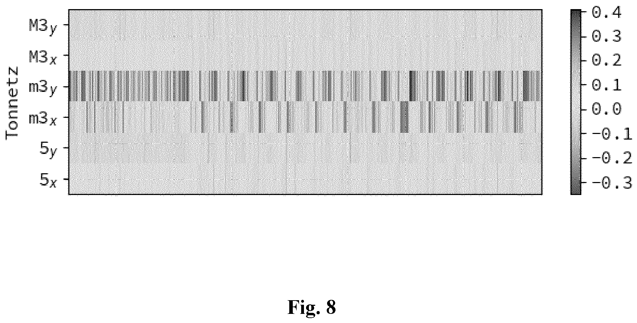

A fourth method for presenting the audio signal is a tonal spectrum (tonnetz). In musical tuning and harmony, the Tonnetz is a conceptual lattice diagram representing a tonal space. (Fig. 8) shows an exemplary tonal spectrum.

In order to operate with the audio files and representations, the library *Librosa* and a practical work of the library's developers were used. Upon calculation of average values within matrices of the spectrogram, mel spectrogram, chromagram and tonal spectrum at a fixed axis of coordinates, basic characteristics of the audio signal were derived: spectrogram, mel spectrogram, chromagram and tonal spectrum. However, these are low-level characteristics of the audio stream, thus, this data was used by classifiers to find high-level characteristics of the audio signal.

In order to detect the high-level audio characteristics, in particular, the genre, the tempo, the energy level, the mood, the acousticness, the rhythmicity and the instrumentality of the music, as well as an amount of speech and noises in the audio file, a large number of classifiers was used, which classified the output high-level characteristics upon receipt of various input low-level characteristics.

In order to detect the genre, the recurrent LSTM model was used, while a dataset GTZAN was used for the learning.

In order to detect the energy level of the music, the multilayer perceptron was used. The learning was conducted on a dataset called Million Song Dataset (MSD).

In order to find a number of sounds and noises, the amount of speech in the audio file is detected. In order to detect the amount of speech in the audio, a convolutional neural network ResNet-152 was used, wherein images of the spectrogram and of the mel spectrogram were fed to the input, while at the fully connected layer, there was only one neuron being responsible for the amount of speech in the audio file. The amount of speech takes a value of from 0 to 1. The more speech there is in the audio file, e.g., a talk show, an audio book, a poetry, the closer the value to 1 is. The values above 0.66 describe tracks which probably consist of spoken words fully. The values from 0.33 to 0.66 describe tracks which may include both music and speech, or which, in some parts, may either consist of both music and speech, e.g., a rap music. The values below 0.33 represent music and other non-speech tracks. Therefore, all high-level characteristics were analyzed in order to analyze the audio.

In order to detect the activity and peaks of the audio, the recurrent LSTM model was used which divides the entire audio material into corresponding parts upon analysis of the same. Namely, to an intro, a verse, a chorus, a bridge and an outro.

In order to predict and to generate the required audio and video characteristics (the modules 205, 305), when the video and audio characteristics are known, the machine learning and data analysis models were used. For example, the multilayer perceptron method.

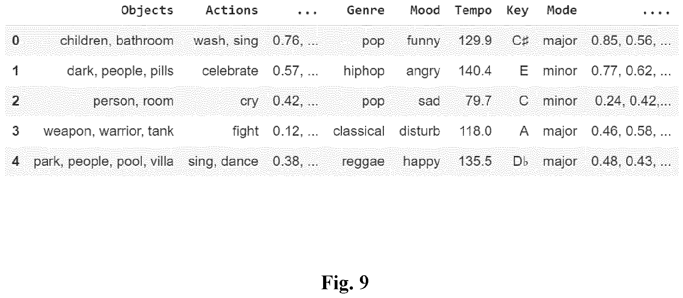

A number of neurons that is present at the input and output layer of the multilayer perceptron corresponds to the characteristics being analyzed in the video or audio stream. All the data was normalized before entering the neuron network. The backpropagation method was used for the learning. The audio parameters/video parameters recommendation module was learned on movies and video clips having harmonious combinations of video and music. Such movies and video clips are considered as materials which gained a positive reaction from reviewers and audience. The movies and the video clips are divided into video and audio streams, analyzed by the video and audio stream analysis module and stored in a training sample in a form of the video and audio parameters. (Fig. 9) shows a fragment of the training sample, where three points mean that there are many other parameters. The multilayer perceptron and/or other machine learning and data analysis methods find regularities between the video parameters and the audio parameters in the collected training sample and predict the required audio and video parameters having the video and the audio parameters only. The training sample is updated continuously and automatically and/or modified and learned again to enhance the operation quality and/or speed of the module.

The proposed invention will be explained by the following examples of implementation.

### Example 1.

By means of the computing device 101, the user uploads his/her own one or several videos (if there are several video clips, they will be combined into a single video) into the intelligent system 200 of the server 100.

The analysis module 202, at its input, receives said video file and analyzes, detects its detailed parameters and sends the found parameters to the recommendation module 203, while it predicts the corresponding audio parameters and sends them to the audio files search module 204 and/or to the audio files generation module 205.

The audio files search module 204 searches for at least one audio file that includes the audio parameters predicted by the module 203 within the databases. The operation of the module provides a selection of up to 10 best music compositions which are in a harmonious combination with the video file sent by the user.

Also, the user may choose another way to obtain the best music compositions. That is, according to the user's instruction, the audio files generation module 205 will receive the audio parameters predicted by the module 203 and generate at least one audio file. The operation of the module results in generation of several music compositions which could be harmoniously combined with the video file sent by the user.

Then, according to the user's instruction, several or one user-selected audio file(s) come to the input of the synchronization module 206. The module 206 performs assembling and synchronization of the user-selected audio file and the video file received from the user computing device. And it searches for the best variants for locating the video and the music and combines them together in such a way that the activity, peaks and other parameters (as described above) of the video and the audio (music) match together. In the process of assembling and synchronization of the audio file and the video file, it adds at least a video effect, an audio effect, a filter or any other audiovisual content.

Finally, the video clip created by the intelligent system is transmitted to the user computing device.

### Example 2

By means of the computing device 101, the user uploads his/her own, for example, written music composition into the intelligent system 200 of the server 100.

The analysis module 302, at its input, receives said audio file and analyze, detects its detailed parameters and sends the found parameters to the recommendation module 303, while it predicts the corresponding video parameters and sends them to the video files search module 304 and/or to the video files generation module 305.

The video files search module 304 searches for at least one video file that includes the video parameters predicted by the module 303 within the databases. The operation of the module provides a selection of up to 10 best videos which could be harmoniously combined with the audio file sent by the user.

Also, the user may choose another way to obtain the best videos. That is, according to the user's instruction, the video files generation module 305 will receive the video parameters predicted by the module 303 and generate at least one video file. The operation of the module results in generation of several video clips which could be harmoniously combined with the audio file sent by the user.

Then, according to the user's instruction, several or one user-selected video file(s) come to the input of the synchronization module 306. The module 306 performs assembling and synchronization of the user-selected video file and the audio file received from the user computing device. And it searches for the best variants for locating the music and the video and combine them together in such a way that the activity, peaks and other parameters (as described above) of the audio (music) and the video match together. In the process of assembling and synchronization of the video file and the audio file, it adds at least a video effect, an audio effect, a filter or any other audiovisual content.

Finally, the video clip created by the intelligent system is transmitted to the user computing device.

Other embodiments which could be covered by the scope of the present invention may be derived by persons skilled in this field of art upon reading the description provided above and referring to the provided drawings, and all such obvious modifications, alterations and/or equivalent replacements shall be considered as those covered by the scope of the present invention. All prior art sources herein stated and considered are hereby included into the present specification by reference as long as it is applicable.

Also, it will be clear for the persons skilled in this field of the art that the steps of the method described herein are not obligatorily performed in the order in which they are described, and at least some of the method steps may be performed in an order other than the described one, including substantially simultaneously, or some of the steps may be omitted. The detailed description of the embodiments of the invention provided above shall not limit or define the scope of the legal protection of the invention.

The inventor has proposed the complex intelligent system that provides the harmonious combination of the video and the audio by using multimedia systems and methods for creating artificial intelligence. Use of the invention will significantly simplify the activity for bloggers, editors and composers assisting them to select the music for the video and *vice versa.*

## Claims

1. A system for providing a harmonious combination of video files and audio files, the system comprises:
at least one server comprising at least one computer processor,
at least one user computing device comprising a memory-stored software application that provides an access to the server, and each user computing device is connected via a communication network to the at least one server;
and the at least one server is configured to process incoming requests in parallel, where the incoming request is at least a request to create video clips, and connected to databases configured to store audio files and/or video files,
**wherein** the at least one server further comprises an intelligent system that comprises an artificial intelligence component having instruments to learn one or more machine learning and data analysis algorithms in order to provide a harmonious combination of the video files and the audio files, the intelligent system
comprises:
a data collection and analysis module to learn and to operate machine learning and data analysis models;
an analysis module configured to analyze at least one video file received from the user computing device and to detect parameters of a video stream;
an audio parameters recommendation module configured to receive the detected video parameters and to predict corresponding audio parameters;
an audio files search module configured to receive the predicted audio parameters and to search for at least one audio file that comprises the predicted audio parameters within the databases;
an audio files generation module configured to receive the predicted audio parameters and to generate at least one audio file that comprises the predicted audio parameters;
a synchronization module configured to receive the at least one audio file from the audio files search module and/or from the audio files generation module, and to assemble and to synchronize said audio file and the video file received from the user computing device, and to return the video clip created by the intelligent system to the user computing device,
wherein
the video parameters are characteristics of the video file: objects, actions, a mood of the video, an activity and peaks, a frame illumination change, a change of colors, a scene change, a movement speed of a background relative to a foreground in the video file, a sequence of frames and a metadata of the video file.
the audio parameters are parameters of the audio file: a genre, a tempo, an energy level, an activity and peaks, a mood, an acousticness, a rhythmicity and an instrumentality of a music, a number of sounds and noises, a digital acoustic signal and a metadata of the audio file.

2. A system for providing a harmonious combination of audio files and video files, the system comprises:
at least one server comprising at least one computer processor,
at least one user computing device user device comprising a memory-stored software application that provides an access to the server, and each user computing device is connected via a communication network to the at least one server;
and the at least one server is configured to process incoming requests in parallel, where the incoming request is at least a request to create video clips, and connected to databases configured to store audio files and/or video files,
**wherein** the at least one server further comprises an intelligent system that comprises an artificial intelligence component having instruments to learn one or more machine learning and data analysis algorithms in order to provide a harmonious combination of the video files and the audio files, the intelligent system
comprises:
a data collection and analysis module to learn and to operate machine learning and data analysis models;
an analysis module configured to analyze at least one audio file received from the user computing device and to detect parameters of an audio stream;
a video parameters recommendation module configured to receive the detected audio parameters and to predict corresponding video parameters;
a video files search module configured to receive the predicted video parameters and to search for at least one video file that comprises the predicted video parameters within the databases;
a video files generation module configured to receive the predicted video parameters and to generate at least one video file that comprises the predicted video parameters;
a synchronization module configured to receive the at least one video file from the video files search module and/or from the video files generation module, and to assemble and to synchronize said video file and the audio file received from the user computing device, and to return the video clip created by the intelligent system to the user computing device,
wherein
the audio parameters are parameters of the audio file: a genre, a tempo, an energy level, an activity and peaks, a mood, an acousticness, a rhythmicity and an instrumentality of a music, a number of sounds and noises, a digital acoustic signal and a metadata of the audio file,
the video parameters are characteristics of the video file: objects, actions, a mood of the video, an activity and peaks, a frame illumination change, a change of colors, a scene change, a movement speed of a background relative to a foreground in the video file, a sequence of frames and a metadata of the video file.

3. A method for providing a harmonious combination of video files and audio files performed by the system according to claim 1 and claim 2, the system comprises at least one server comprising at least one computer processor that comprises an intelligent system and at least one user computing device,
**wherein** the method comprises the steps of:
- uploading at least one video file or audio file to the intelligent system for providing a harmonious combination of video files and audio files;
- analyzing said video file or audio file;
- detecting parameters of a video stream or an audio stream;
- predicting corresponding audio parameters or video parameters;
- searching for at least one audio file that comprises the predicted audio parameters or at least one video file that comprises the predicted video parameters within databases;
- generating at least one audio file that comprises the predicted audio parameters or at least one video file that comprises the predicted video parameters;
- assembling and synchronizing the audio file found within the databases or the generated audio file and the video file received from the user computing device,
or
- assembling and synchronizing the video file found within the databases or the generated video file and the audio file received from the user computing device,
- returning a video clip created by the intelligent system to the user computing device.

4. The method according to claim 3, **wherein** the steps of assembling and synchronizing the audio file and the video file comprise adding at least one video effect, audio effect, filter or any other audiovisual content.
